# FASCICULE DE BREVET EUROPEEN

(11) **EP 3 937 193 B1**
(45) Date de publication et mention de la délivrance du brevet: **02.08.2023**
(21) Numéro de dépôt: 21177635.6
(22) Date de dépôt: 03.06.2021
(51) Int. Cl.: H01B 13/012

(54) **OUTIL D'ORIENTATION ANGULAIRE POUR PERMETTRE UNE FABRICATION ET UN CONTROLE D'UN HARNAIS**
WERKZEUG ZUR WINKELAUSRICHTUNG, DAS DIE HERSTELLUNG UND KONTROLLE EINES KABELBAUMS ERMÖGLICHT
TOOL WITH ANGULAR ORIENTATION TO ALLOW MANUFACTURING AND CONTROL OF A HARNESS

(30) Priorité: 10.07.2020 FR 2007330
(43) Date de publication de la demande: 12.01.2022
(73) Titulaire: Airbus Helicopters, 13725 Marignane Cedex (FR)
(72) Inventeur: PITTAU, Serge, 13720 LA BOUILLADISSE (FR); MARTINO, Franck, 13110 PORT DE BOUC (FR)
(74) Mandataire: GPI Brevets

(56) Documents cités:
- EP-A1- 0 924 713
- WO-A1-2019/234080
- FR-A1- 2 880 464
- US-B1- 10 340 648
- Xin Yang: "Robotic Assembly of Automotive Wire Harnesses", , 1 juillet 2014 (2014-07-01), XP055781006, Extrait de l'Internet: URL:https://www.assemblymag.com/articles/9 2264-robotic-assembly-of-automotive-wire-h arnesses [extrait le 2021-03-02]

## Description

La présente invention se rapporte au domaine des outils pour la fabrication des harnais et également pour permettre de les contrôler durant une phase de conception pour valider ou affiner une orientation modélisée par ordinateur ou encore ultérieurement à leur fabrication et/ou leur utilisation. De tels harnais comportent au moins un élément longiligne formé par exemple par au moins un fil de connexion, au moins un câble et/ou au moins une gaine de protection. Un tel élément longiligne s'étend alors entre au moins deux organes de connexion ou entre un organe de connexion et un autre élément longiligne par exemple.

De tels organes de connexion peuvent quant à eux être par exemple formés par des connecteurs, par des bagues, par des cosses ou encore par un embout conducteur d'électricité.

On appelle harnais tout système d'interconnexion qu'il soit électrique ou optique. Le harnais permet de transférer des signaux tels que par exemple des signaux numériques, analogiques ou optiques. Un harnais peut ainsi être indifféremment soit conducteur de l'électricité, soit conducteur de la lumière.

Le ou les fils de connexion conducteurs de l'électricité ou de la lumière peuvent notamment être recouverts par au moins une gaine de protection permettant de protéger le ou les fils de connexion des frottements ou de tout contact avec un corps étranger. Dans ce cas, un élément longiligne peut comprendre à la fois au moins un fil de connexion et au moins une gaine de protection.

Les organes de connexion sont destinés à coopérer avec des équipements électriques ou avec d'autres harnais et peuvent être recouverts au moins partiellement par des manchons rétractables. De tels manchons rétractables peuvent en effet être agencés en recouvrement au moins partiel à la fois d'une extrémité d'une gaine de protection et d'un organe de connexion électrique ou en recouvrement au moins partiel de plusieurs portions de gaines de protection dans le cas d'une dérivation. Ces manchons rétractables, une fois rétractés, permettent ainsi de conférer un caractère étanche à la poussière et/ou à l'eau à ces liaisons.

En outre, une fois les manchons rétractables rétractés lors d'une opération de retreint par exemple thermique ou éventuellement lors d'une opération de réticulation d'une colle, d'un mastic ou analogue, les organes de connexion et l'élément longiligne sont rigidement liés les uns aux autres. Ainsi, une rotation d'un organe de connexion par rapport à un axe longitudinal selon lequel s'étend l'élément longiligne peut causer des sollicitations en torsion dans ce harnais, voire une déformation plastique de l'élément longiligne lorsque les contraintes en cisaillement dépassent une valeur de seuil.

De même pour des harnais rigides, l'élément longiligne peut être formé par exemple par un câble électrique de section importante. Dans ce cas, il peut être difficile voire impossible d'effectuer une rotation d'un organe de connexion par rapport à l'axe longitudinal selon lequel s'étend l'élément longiligne. La raideur en torsion de cet élément longiligne peut empêcher ainsi toute modification ultérieure de l'orientation angulaire d'un organe de connexion par rapport à l'axe longitudinal de l'élément longiligne.

Lorsque que la connexion de l'organe de connexion est tout de même possible mais avec une forte contrainte en torsion de l'élément longiligne et/ou d'un organe de connexion, des vibrations auxquelles le harnais est soumis lors de son utilisation peuvent également conduire à son endommagement. En effet, ces contraintes combinées aux vibrations peuvent alors cisailler et/ou sectionner les éléments avec lesquelles un tel harnais coopère.

De façon générale dans le domaine aéronautique, de tels harnais peuvent être réalisés à partir d'un premier maquettage physique d'un harnais modèle réalisé directement sur un aéronef modèle. Ensuite, on procède au démontage du harnais modèle de l'aéronef modèle et on fabrique un ou plusieurs outillages spécifiques telles des contreformes avec lesquelles le harnais modèle coopère de façon complémentaire.

Ce type d'outillage spécifique est conçu pour maintenir les organes de connexion durant la phase de retreint des manchons rétractables, de telle sorte que les organes de connexion et/ou l'élément longiligne ne soient pas déformés lors du montage ultérieur du harnais sur un aéronef. Pour cela, un outil possède, au niveau de chacun des organes de connexion, une position et une orientation fixes et prédéterminées préalablement lors de la phase de maquettage.

Ce type d'outil peut alors former un sous-ensemble, appelé module, d'un système modulaire permettant de fabriquer un harnais complet.

Généralement, un opérateur dispose une pluralité d'outils sur une table complète formant un outillage spécifique à chaque harnais.

Un opérateur peut également utiliser une table modulaire et disposer les différents modules afin de constituer un système d'outillage dénommé par commodité « outillage complet » par opposition à la notion d'outillage spécifique précédente. La fiche technique de fabrication d'un harnais liste les références des différents modules à utiliser ainsi que les emplacements respectifs sur lesquels ils doivent être disposés sur la table modulaire.

Les modules contraignent notamment l'orientation angulaire relative des différents organes de connexion et des différents manchons de dérivation par rapport à l'axe longitudinal des différentes branches du harnais avant la phase de retreint des manchons rétractables ou avant un marquage puis sertissage des organes de connexion avec les éléments longilignes.

Un tel outillage complet permet de traiter en une seule fois l'ensemble des paramètres dimensionnels du harnais tels que notamment la longueur des branches ainsi que l'orientation angulaire relative des organes de connexion et des manchons de dérivation par rapport à l'élément longiligne.

Les valeurs angulaires des orientations radiales des organes de connexion et des manchons de dérivation par rapport à chaque élément longiligne ne sont pas spécifiées dans le document de travail indiquant à l'opérateur les phases de fabrication d'un harnais. Ces valeurs angulaires sont en effet imposées et figées par les différents modules.

Cependant, certains modules peuvent être spécifiques à un type et une orientation particulière d'un organe de connexion ou d'un manchon de dérivation. Le nombre de modules nécessaires peut être très important en fonction d'une part du nombre d'organes de connexion et de manchons de dérivation différents à positionner sur un même harnais et d'autre part du nombre de harnais différents que l'on peut fabriquer pour un même aéronef et/ou pour plusieurs aéronefs différents. Ceci peut poser des problèmes en termes de stockage et de gestion de ces différents modules ou dans le cas des outillages complets spécifiques qui ne peuvent pas être décomposés en plusieurs modules.

De plus, le temps nécessaire pour la recherche et la mise en place des différents modules sur la table modulaire est non négligeable. De même, une fois la fabrication d'un harnais terminée, il peut être nécessaire de démonter l'ensemble des modules de la table modulaire, de les identifier et de les ranger chacun dans un emplacement bien repéré pour une éventuelle réutilisation ultérieure.

Par ailleurs, de tels modules ou outillages complets spécifiques imposent également des coûts financiers importants liés à leur développement, leur étude et leur réalisation. De plus, toute modification de définition touchant à l'orientation angulaire relative d'un organe de connexion par rapport à un élément longiligne impose la modification du module concerné ou de l'outillage complet spécifique ce qui impacte de fait le coût et le cycle de production.

Enfin, en cas de problème de montage du harnais sur un aéronef, on ne peut pas déterminer la cause du problème sans procéder au démontage du harnais de l'aéronef et sans le mettre à nouveau en place sur l'outillage qui sert de gabarit.

Les documents JP3959006 et US 7 529 638 décrivent des outils pour la fabrication d'un harnais comportant au moins trois connecteurs et au moins une dérivation à trois branches. Un tel harnais peut dès lors posséder une géométrie en trois dimensions mais est réalisé sur un plan selon deux axes. Ainsi, il est décrit une phase de fabrication en utilisant un angle prédéterminé mesuré dans ce plan de travail.

Cependant, on fabrique à plat un harnais avec cet angle prédéterminé entre les trois branches, l'orientation des différents connecteurs par rapport à chaque tronçon de gaine peut ensuite être modifiée lors du montage ultérieur par les autres tronçons de gaines de protection orientés différemment. Des contraintes de cisaillement générées par les sollicitations en torsion peuvent dès lors apparaitre dans les différentes branches sur la gaine de protection et/ou sur les connecteurs et les dérivations.

Le document US 9 090 215 décrit quant à lui un harnais comportant une dérivation à trois branches pour orienter des fils selon une unique orientation relative prédéterminée.

Par ailleurs, pour fabriquer des harnais, il est également connu d'utiliser des outils tels que décrits dans les documents EP 0 924 713, WO 2019/234080, FR 2 880 464, US 10 340 648 B1 ou dans l'article "Robotic Assembly of Automotive Wire Harnesses" publié par Xin Yang le 1er juillet 2014 et consultable sur le site internet https://www.assemblymag.com/articles/92264-robotic-assembly-ofautomotive-wire-harnesses.

Si ces outils peuvent comporter un plateau fixe et un support d'immobilisation permettant d'immobiliser un connecteur, ils ne permettent cependant pas de supprimer les sollicitations en torsion générées lors du montage du harnais sur un aéronef.

La présente invention a alors pour objet de proposer un outil alternatif pour la fabrication de harnais permettant de s'affranchir des limitations mentionnées ci-dessus. En outre, un tel outil peut permettre de limiter le nombre de modules différents mais également de ne pas avoir recours à une table modulaire pour fabriquer différents harnais. Il permet également de limiter voire de garantir l'absence de toute sollicitation en torsion générée lors du montage du harnais dans l'élément longiligne, les dérivations et/ou les organes de connexion.

L'invention se rapporte donc à un outil d'orientation angulaire pour permettre une fabrication et un contrôle d'un harnais, le harnais comportant au moins un organe de connexion et au moins un élément longiligne.

Cet outil est remarquable en ce qu'il comporte :
- un plateau fixe comportant une portion de forme plane,
- au moins un dispositif d'immobilisation pour immobiliser en tout ou partie le au moins un élément longiligne et rendre en tout ou partie cet au moins un élément longiligne solidaire du plateau fixe,
- une pièce mobile présentant un degré de mobilité en rotation par rapport au plateau fixe autour d'un axe de rotation, l'axe de rotation étant agencé parallèlement à une direction longitudinale OX selon laquelle s'étend longitudinalement le au moins un élément longiligne sur le plateau fixe,
- au moins un support d'immobilisation configuré pour immobiliser l'au moins un organe de connexion par rapport à la pièce mobile et rendre cet au moins un organe de connexion solidaire de la pièce mobile, et
- une échelle angulaire graduée pour relever une orientation angulaire relative entre le au moins un élément longiligne et le au moins un organe de connexion, l'orientation angulaire relative étant définie dans un plan perpendiculaire à la direction longitudinale OX selon laquelle s'étend longitudinalement le au moins un élément longiligne sur le plateau fixe.

Autrement dit, un tel outil permet de positionner angulairement et de maintenir en position au moins un organe de connexion par rapport à au moins un élément longiligne selon une orientation angulaire relative pour participer à la fabrication d'un harnais.

Un tel outil peut également permettre d'effectuer des mesures de l'orientation angulaire relative d'au moins un organe de connexion par rapport à un élément longiligne sur un harnais, et par exemple un harnais modèle préalablement fabriqué. Cet outil permet aussi de réaliser le contrôle de telles orientations angulaires relatives lors de la fabrication du harnais ou encore une fois le harnais fabriqué. Un tel contrôle peut notamment être utile préalablement au montage du harnais sur un aéronef ou lors du montage si un problème est identifié.

En outre, un tel outil peut permettre de contrôler une orientation angulaire relative une fois le harnais totalement monté sur l'aéronef sans nécessiter son démontage de l'aéronef.

L'axe de rotation de la pièce mobile et la direction longitudinale OX de l'élément longiligne étant avantageusement confondus, l'outil permet ainsi de faire tourner sur un angle maximum de 360° l'organe de connexion par rapport à la direction longitudinale OX de l'élément longiligne lorsqu'il est utilisé pour fabriquer un harnais. L'élément longiligne et l'organe de connexion peuvent alors être immobilisés selon une orientation angulaire précise. En outre, le harnais se trouve alors parfaitement centré sur l'axe de rotation de l'élément de mesure.

Le ou les éléments longilignes peuvent par exemple comporter plusieurs fils formant un câble conducteur de l'électricité ou de la lumière pour transmettre des signaux analogiques, numériques ou optiques. En fonction de sa section, un tel câble peut présenter une grande raideur en torsion empêchant de conférer une souplesse en torsion au harnais. L'outil conforme à invention peut alors permettre d'orienter l'organe de connexion précisément par rapport à ce câble préalablement par exemple à un repérage angulaire ou au sertissage d'une cosse, au collage ou retreint d'un manchon rétractable.

Le ou les éléments longilignes peuvent également par exemple comporter un ou plusieurs fils souples recouverts par une gaine de protection. Une telle gaine de protection présentant une faible résistance au cisaillement, l'outil conforme à invention peut alors permettre d'orienter l'organe de connexion précisément par rapport à la gaine de protection évitant ainsi de la déformer plastiquement lors du montage du harnais par exemple sur un véhicule tel un aéronef.

Par la suite à des fins de simplification l'expression de « organe de connexion » peut désigner aussi bien un connecteur droit muni d'un ergot ou d'un détrompeur, un connecteur coudé par exemple avec un angle de 90°, une cosse ou encore une dérivation à au moins trois banches du harnais. Un tel organe de connexion peut par ailleurs être éventuellement, mais non nécessairement, partiellement recouvert d'un manchon rétractable.

L'expression « manchon rétractable » peut désigner indifféremment un manchon thermo-rétractable ou tout autre type de manchon permettant de réaliser une étanchéité au niveau d'une liaison entre d'une part un organe de connexion et d'autre part un élément longiligne.

En outre, un tel manchon rétractable peut comporter un manchon solidarisé par un procédé de collage au moyen d'un intermédiaire de collage tel une colle ou un mastic interposé entre ce manchon, l'organe de connexion et l'élément longiligne. Un autre type de manchon rétractable peut également être serré mécaniquement sur l'organe de connexion et l'élément longiligne tel un presse étoupe par exemple.

Avantageusement, l'outil peut comporter un moyen de verrouillage angulaire pour verrouiller en position la pièce mobile par rapport au plateau fixe.

De cette manière, il est par exemple possible d'effectuer un retreint d'un manchon rétractable au moins en recouvrement partiel de l'organe de connexion et de l'élément longiligne. De même, une fois le verrouillage de la pièce mobile effectué, on peut procéder au sertissage d'un organe de connexion sur l'élément longiligne.

En pratique, l'outil peut comporter au moins un palier de guidage pour guider en rotation la pièce mobile autour de l'axe de rotation.

Un tel palier de guidage permet en effet de réduire l'usure et les frottements entre les pièces en mouvement telle la pièce mobile et les pièces immobiles de l'outil telles que notamment le plateau fixe. Ce palier peut par exemple comporter une ou plusieurs parties formées dans un matériau à faible coefficient de frottement tel que du polytétrafluoroéthylène (PTFE).

Selon un exemple, l'outil peut comporter un disque fixe solidaire du plateau fixe, le disque fixe comportant, pour indiquer l'orientation angulaire relative, soit l'échelle angulaire graduée soit un index radial destiné à être agencé en regard de l'échelle angulaire graduée.

Un tel disque fixe peut ainsi être solidarisé en liaison de type encastrement avec le plateau fixe par exemple via des moyens de solidarisation réversible tels des vis, des boulons, des écrous ou analogues, voire via des moyens de solidarisation non réversible comme par exemple un cordon de soudure ou de colle.... Le disque fixe comporte alors un axe de révolution qui est confondu avec l'axe de rotation de la pièce mobile.

Un tel disque fixe peut ainsi permettre à un opérateur de relever une orientation angulaire relative de la pièce mobile par rapport au disque fixe et donc par rapport au plateau fixe.

De manière complémentaire ou alternative, la pièce mobile peut comporter un disque mobile comportant, pour indiquer l'orientation angulaire relative, soit l'échelle angulaire graduée soit un index radial destiné à être agencé en regard de l'échelle angulaire graduée.

Un tel disque mobile peut alors tourner par rapport à l'axe de rotation et permet également à un opérateur de relever une orientation angulaire relative de la pièce mobile par rapport à un disque fixe ou bien directement par rapport au plateau fixe.

Avantageusement, l'outil comportant un moyen de verrouillage angulaire pour verrouiller en position la pièce mobile par rapport au plateau fixe, le moyen de verrouillage angulaire peut comporter un doigt d'indexage, ce doigt d'indexage comportant un corps solidaire soit du disque fixe soit de la pièce mobile et une tige mobile en translation par rapport au corps selon une direction AX parallèle à la direction longitudinale OX.

Autrement dit, le moyen de verrouillage peut être solidarisé avec le disque fixe ou avec la pièce mobile. Le corps du doigt d'indexage est alors agencé en liaison de type encastrement avec le disque fixe ou la pièce mobile via des moyens de solidarisation réversible tels que décrits précédemment.

La tige du doigt d'indexage peut être actionnée manuellement par un opérateur selon un premier sens de la direction AX parallèle à la direction longitudinale OX pour libérer la pièce mobile et permettre sa rotation autour de l'axe de rotation. Un moyen de rappel élastique, tel un ressort hélicoïdal sollicité en traction ou en compression peut permettre ensuite de déplacer la tige selon un second sens de la direction AX parallèle à la direction longitudinale OX pour immobiliser la pièce mobile par rapport au disque fixe.

En pratique, la pièce mobile comportant un disque mobile, le disque mobile peut présenter une face externe, la face externe comportant une pluralité d'encoches équiréparties en azimut autour de l'axe de rotation, chaque encoche comportant une forme complémentaire à la tige du doigt d'indexage.

Ainsi lorsqu'un opérateur relâche la tige du doigt d'indexage, celle-ci se déplace selon le second sens et une extrémité libre de la tige vient coopérer avec l'une des encoches agencée en regard. Une fois la tige insérée dans l'encoche, le disque mobile et donc la pièce mobile ne peuvent alors plus pivoter autour de l'axe de rotation. Le degré de mobilité en rotation de la pièce mobile étant alors temporairement supprimé, la pièce mobile est agencée selon une liaison provisoire de type encastrement avec le disque fixe et donc avec le plateau fixe.

Par ailleurs, le disque fixe peut comporter une ouverture fixe et la pièce mobile peut comporter une ouverture mobile, l'ouverture fixe étant agencée en regard de l'ouverture mobile quel que soit un positionnement angulaire de la pièce mobile par rapport au disque fixe autour de l'axe de rotation.

De telles ouvertures fixe et mobile permettent alors un passage du au moins un élément longiligne au travers du disque fixe et du disque mobile.

Ces ouvertures fixe et mobile peuvent être de forme circulaire ou de forme oblongue par exemple pour permettre le passage d'un organe de connexion au travers du disque fixe et du disque mobile.

Selon un autre exemple de réalisation, l'outil peut comporter un bras mobile solidaire en rotation de la pièce mobile, le au moins un support d'immobilisation étant monté sur le bras mobile.

Un tel bras mobile est donc solidarisé en liaison de type encastrement avec la pièce mobile par exemple via des moyens de solidarisation réversible tels des vis, des écrous ou des boulons. Un premier bras mobile peut comporter une première forme apte à coopérer avec un premier modèle d'organe de connexion. Ce premier bras mobile peut alors être éventuellement remplacé par un second bras mobile comportant une seconde forme distincte de la première forme et apte à coopérer avec un second modèle d'organe de connexion.

Avantageusement, l'outil peut comporter des moyens de réglage permettant de modifier un positionnement du au moins un support d'immobilisation sur le bras mobile.

Autrement dit, en fonction du type, de la taille ou d'une orientation de l'organe de connexion, les moyens de réglage permettent d'adapter la position du ou des supports d'immobilisation sur le bras mobile. De tels moyens de réglage peuvent par exemple comporter des vis, des écrous, des boulons, des billes et ressorts, un doigt de verrouillage, un système à baïonnette, des pinces ou analogues coopérant par exemple avec des trous de forme oblongue ménagés dans le bras mobile.

Une fois les vis et/ou les écrous au moins partiellement desserrés d'un organe de serrage complémentaire, le ou les supports d'immobilisation sont alors aptes à se déplacer en translation par exemple suivant une direction radiale OY du bras mobile ou encore suivant la direction longitudinale OX du plateau fixe. Le réglage en position effectué, les vis et/ou les écrous peuvent être resserrés avec l'organe de serrage complémentaire pour maintenir en position le ou les supports d'immobilisation sur le bras mobile.

L'invention et ses avantages apparaîtront avec plus de détails dans le cadre de la description qui suit avec des exemples donnés à titre illustratif en référence aux figures annexées qui représentent :
la figure 1, une première vue en perspective d'un outil conforme à l'invention,
la figure 2, une deuxième vue en perspective selon une orientation angulaire relative initiale d'un outil conforme à l'invention,
la figure 3, une troisième vue en perspective selon une autre orientation angulaire relative d'un outil conforme à l'invention, et
la figure 4, une quatrième vue en perspective d'un outil conforme à l'invention.

Comme déjà évoqué, l'invention se rapporte au domaine des outils pour la fabrication et le contrôle d'un harnais par exemple destiné à équiper un aéronef.

Les éléments présents dans plusieurs figures distinctes pourront le cas échéant être affectés d'une seule et même référence.

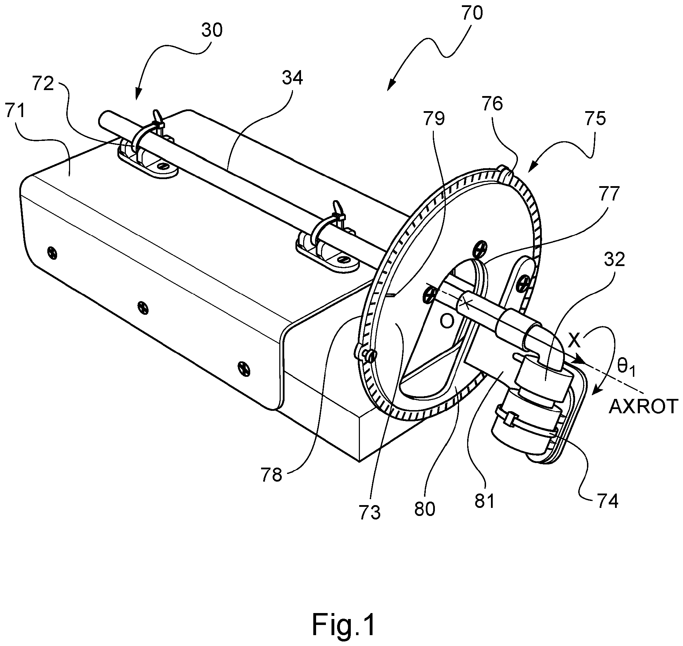

Tel que représenté à la figure 1, l'invention se rapporte à un outil 70 permettant au moins de positionner angulairement et de maintenir en position au moins un organe de connexion 32 par rapport à un élément longiligne 34 selon une orientation angulaire relative θ1. En outre, une telle orientation angulaire relative θ1 est plus particulièrement définie entre deux directions dans un plan perpendiculaire à une direction longitudinale OX selon laquelle s'étend longitudinalement l'élément longiligne 34. Un élément longiligne 34 est alors agencé au-dessus d'une portion plane d'un plateau fixe 71 de l'outil 70.

Tel que représenté, l'organe de connexion 32 peut par exemple comporter un connecteur coudé à 90°. L'organe longiligne 34 peut par exemple comprendre au moins un fil de connexion, au moins un câble et/ou au moins une gaine de protection.

Un tel outil 70 permet alors de participer à la fabrication d'un harnais 30 en orientant relativement l'organe de connexion 32 par rapport à un élément longiligne 34.

Une autre fonction de cet outil 70 peut aussi consister à mesurer une orientation angulaire relative entre un organe de connexion modèle et un élément longiligne modèle. Cette mesure est alors effectuée sur un harnais modèle monté par exemple sur un aéronef préalablement à la fabrication du harnais 30.

L'outil 70 peut également permettre de réaliser un contrôle d'un harnais 30 en mesurant l'orientation angulaire relative θ1 sur un harnais 30 non monté ou bien monté sur un aéronef.

Cet outil 70 comporte ainsi un plateau fixe 71 comportant une portion de forme plane et au moins un dispositif d'immobilisation 72 pour immobiliser en tout ou partie un élément longiligne 34 du harnais 30 et rendre en tout ou partie cet élément longiligne 34 solidaire du plateau fixe 71.

De tels dispositifs d'immobilisation 72 peuvent comporter une embase solidarisée avec le plateau fixe 71 via des moyens de solidarisation réversible ou non réversible et des colliers de serrage fixés à l'embase voire passant au travers de l'embase. De tels colliers de serrage permettent de plaquer un élément longiligne 34 sur l'embase des dispositifs d'immobilisation 72. Un effort de traction sur une extrémité libre des colliers de serrage permet alors d'immobiliser l'élément longiligne 34 par rapport au plateau fixe 71.

L'outil 70 comporte également une pièce mobile 73 apte à pivoter autour d'un axe de rotation AXROT agencé parallèlement à la direction longitudinale OX selon laquelle s'étend longitudinalement l'élément longiligne 34. Plus précisément, un tel axe de rotation AXROT est avantageusement confondu avec cette direction longitudinale OX de l'élément longiligne 34. Eventuellement, l' axe de rotation AXROT peut être agencé parallèlement par rapport à la portion plane du plateau fixe 71.

Par ailleurs, au moins un support d'immobilisation 74 est monté sur la pièce mobile 73 et par exemple sur un bras mobile 81 solidarisé à un disque mobile 80. Ce ou ces supports d'immobilisation 74 sont ainsi configurés pour immobiliser l'organe de connexion 32 du harnais 30 par rapport à la pièce mobile 73. L'organe de connexion 32 est alors solidaire de la pièce mobile 73.

Comme précédemment pour les dispositifs d'immobilisation 72, un support d'immobilisation 74 peut comporter une embase solidarisée à la pièce mobile 73 via des moyens de solidarisation réversible ou non réversible et des colliers de serrage ou des équivalents fixés à l'embase.

L'outil 70 comporte également une échelle angulaire graduée 75 pour relever l'orientation angulaire relative θ1 entre le ou les éléments longilignes 34 et le ou les organes de connexion 32.

En outre, un tel outil 70 peut avantageusement comporter un moyen de verrouillage angulaire 76 pour verrouiller en position la pièce mobile 73 par rapport au plateau fixe 71.

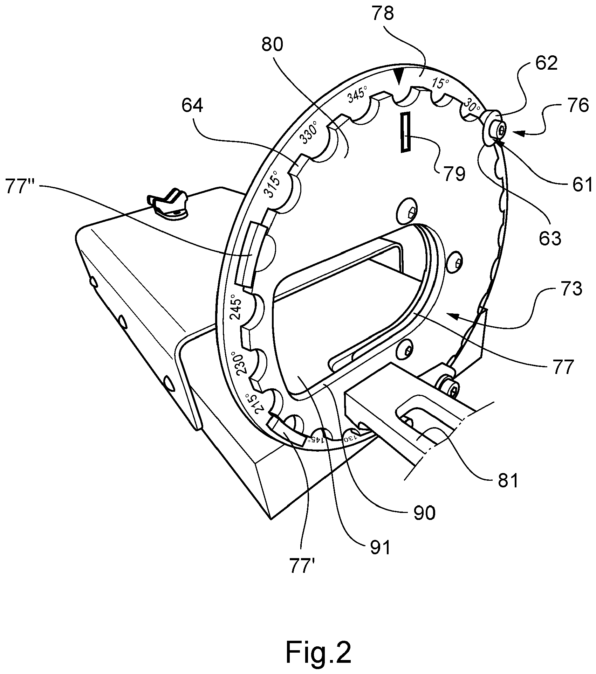

Tel que représenté plus en détails aux figures 2 à 4, un tel moyen de verrouillage angulaire 76 peut notamment se présenter sous la forme d'un doigt d'indexage comportant un corps 60 solidarisé avec le plateau fixe 71 et une tige 61 dont l'extrémité libre 62 coopère avec au moins un trou ou au moins une encoche 63 de forme complémentaire ménagée sur la pièce mobile 73.

La tige 61 peut être actionnée manuellement par un opérateur selon un premier sens d'une direction AX parallèle à la direction longitudinale OX pour libérer la pièce mobile 73 et permettre sa rotation autour de l'axe de rotation AXROT. Un moyen de rappel élastique 66, tel un ressort hélicoïdal sollicité en traction ou en compression permet ensuite de déplacer la tige 61 selon un second sens de la direction AX pour immobiliser la pièce mobile 73 par rapport au plateau fixe 71. Selon un autre exemple non représenté, le corps 60 peut également être solidarisé avec la pièce mobile 73 et l'extrémité libre 62 de la tige 61 coopère alors avec une encoche ou un trou ménagé sur le plateau fixe 71.

Bien entendu, d'autres moyens de verrouillage non représentés peuvent également être envisagés et comporter par exemple un patin et un système de freinage, ou encore une crémaillère de forme circulaire ou une roue crantée coopérant avec au moins un cliquet.

Par ailleurs, l'outil 70 peut comporter au moins un palier de guidage 77, 77', 77" pour guider en rotation la pièce mobile 73 autour de l'axe de rotation AXROT. Un tel au moins un palier de guidage 77, 77', 77" est également configuré pour libérer un passage et permettre un positionnement coaxial du harnais 34 et de l'élément d'extrémité 32 au niveau de cet axe de rotation AXROT.

De tels paliers de guidage 77, 77', 77" peuvent notamment être réalisés dans un matériau à faible coefficient de frottement tel que du polytétrafluoroéthylène (PTFE). Les paliers de guidage 77', 77" peuvent comporter plusieurs portions cylindriques solidarisées avec un disque fixe 78 solidaire du plateau fixe 71. Un autre palier de guidage 77 peut quant à lui être solidarisé à la pièce mobile 73.

Eventuellement d'autres types de palier de guidage peuvent être utilisés et comporter par exemple au moins une bague en bronze, au moins un roulement présentant des éléments roulants tels que des billes, rouleaux ou aiguilles.

Tel que représenté, un tel disque fixe 78 peut comporter l'échelle angulaire graduée 75 pour indiquer l'orientation angulaire relative θ1. En outre, le corps 60 peut être avantageusement solidarisé avec un tel disque fixe 78.

La pièce mobile 73 peut alors comporter un disque mobile 80 comportant, pour indiquer l'orientation angulaire relative θ1, un index radial 79 destiné à être agencé en regard de l'échelle angulaire graduée 75. Selon un autre exemple non représenté, la pièce mobile 73 peut comporter un disque mobile 80 comportant, pour indiquer l'orientation angulaire relative θ1, l'échelle angulaire graduée 75. Dans ce cas, l'index radial 79 peut être agencé sur le plateau fixe 71 ou encore sur une pièce solidaire du plateau fixe 71.

Un tel disque mobile 80 peut présenter une face externe 64 comportant une pluralité d'encoches 63 equiréparties en azimut autour de l'axe de rotation AXROT. Comme indiqué précédemment, chaque encoche 63 comporte une forme complémentaire à une extrémité 62 de la tige 61 du doigt de verrouillage.

Par ailleurs, cette pièce mobile 73 peut comporter un bras mobile 81 sur lequel le ou les supports d'immobilisation 74 sont montés.

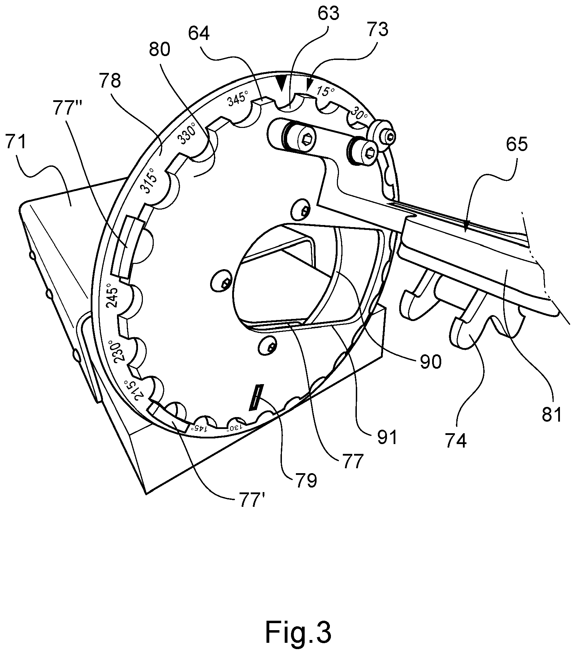

En outre tel que représenté à la figure 3, l'outil 70 peut également comporter des moyens de réglage 65 permettant de modifier un positionnement du support d'immobilisation 74 par rapport au bras mobile 81. Ainsi en fonction du type, de l'orientation ou de la taille de l'organe de connexion 32, il peut être avantageux d'utiliser les moyens de réglage 65 pour adapter la position du support d'immobilisation 74 sur le bras mobile 81.

De tels moyens de réglage 65 peuvent notamment comporter des trous de forme oblongue par exemple et des moyens de solidarisation réversible tels que des vis notamment. Les trous de forme oblongue sont ménagés dans le bras mobile 81 et/ou dans une embase d'un support d'immobilisation 74 et permettent alors par exemple de déplacer en translation ce support d'immobilisation 74 par rapport au bras mobile 81 selon une direction parallèle à la direction longitudinale OX.

Par ailleurs, le disque fixe 78 peut comporter une ouverture fixe 90 et la pièce mobile 73 peut quant à elle comporter une ouverture mobile 91. Par ailleurs, l'ouverture fixe 90 reste constamment au moins partiellement agencée en regard de l'ouverture mobile 91 lors de la rotation de la pièce mobile 73. Ainsi, un élément longiligne 34 passe constamment au travers de l'ouverture fixe 90 et de l'ouverture mobile 91.

Ces ouvertures fixe 90 et mobile 91 sont notamment configurées pour qu'un opérateur puisse par exemple effectuer une opération de retreint d'un manchon rétractable agencé en recouvrement au moins partiel d'un organe de connexion 32 une fois orienté au moyen de l'outil 70 selon l'orientation angulaire relative θ1 entre l'élément longiligne 34 et l'organe de connexion 32. Ces ouvertures fixe 90 et mobile 91 peuvent également permettre à un opérateur d'effectuer un marquage de repères sur l'élément longiligne 34 et un organe de connexion 32 dans le cas d'une fabrication de harnais présentant une grande rigidité en torsion. Une fois le marquage réalisé, l'opérateur peut ensuite extraire le harnais de l'outil 70 pour par exemple sertir l'organe de connexion 32 avec l'élément longiligne 34.

De telles ouvertures fixe 90 et mobile 91 peuvent également permettre à un opérateur de procéder directement à un sertissage d'un organe de connexion 32 une fois orienté au moyen de l'outil 70 selon l'orientation angulaire relative θ1 entre l'élément longiligne 34 et l'organe de connexion 32.

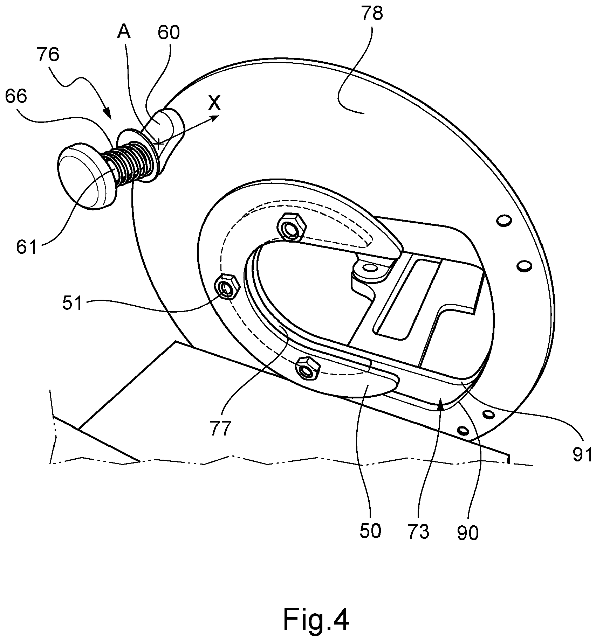

En outre, tel que représenté à la figure 4, la pièce mobile 73 peut comporter une platine 50 et des moyens de solidarisation réversible 51 tels que notamment des vis et des écrous. La platine 50 est alors rendue solidaire avec le disque mobile 80 et empêche un déplacement relatif en translation de la pièce mobile 73 par rapport au disque fixe 80 suivant la direction longitudinale OX. Le palier de guidage 77 est alors interposé suivant la direction longitudinale OX entre le disque mobile 80 et la platine 50 pour venir au contact du disque fixe 78.

Par suite pour fabriquer un harnais 30, un opérateur vient positionner un élément longiligne 34 sur les embases de deux dispositifs d'immobilisation 72. Une extrémité de l'élément longiligne 34 est introduite au travers du disque fixe 78 et du disque mobile 80 au niveau respectivement d'une ouverture fixe 90 et d'une ouverture mobile 91.

Par exemple, cette extrémité de l'élément longiligne 34 peut comporter un organe de connexion 32 et un manchon rétractable agencé dans un état non retreint en recouvrement partiel de l'élément longiligne 34 et de l'organe de connexion 32.

L'élément longiligne 34 présentant par exemple une gaine de protection et au moins un fil de connexion, la gaine de protection est alors solidarisée avec le plateau fixe 71 au moyen des deux dispositifs d'immobilisation 72. La pièce mobile 73 est alors orientée dans une position initiale dans laquelle l'index radial 79 est agencé en regard d'une valeur 0° sur l'échelle angulaire graduée 75.

L'organe de connexion 32 est alors immobilisé par rapport au bras mobile 81 grâce à un support d'immobilisation 74 agencé sur la pièce mobile 73. L'opérateur effectue ensuite une rotation de la pièce mobile 73 autour de l'axe de rotation AXROT de l'orientation angulaire relative θ1 qu'il peut relever directement en regardant la position de l'index radial 79 sur l'échelle angulaire graduée 75.

Une fois la position angulaire correspondante atteinte, l'opérateur actionne le moyen de verrouillage angulaire 76. Il peut alors procéder à une opération de retreint du manchon rétractable ce qui a pour effet de figer l'orientation angulaire relative θ1 entre l'organe de connexion 32 et la gaine de protection de l'élément longiligne 34 ou, dans le cas d'un harnais très rigide en torsion et ou de grosse section, au marquage de repères agencés en regard l'un de l'autre sur l'organe de connexion 32 et l'élément longiligne 34.

Les deux dispositifs d'immobilisation 72 et le support d'immobilisation 74 sont alors manipulés par l'opérateur pour permettre de dégager l'outil de cette portion du harnais 30.

En outre, comme déjà indiqué un tel outil 70 peut également permettre d'effectuer une mesure de l'orientation angulaire relative θ1 sur un harnais préalablement fabriqué.

Dans ce cas, l'élément longiligne 34 est solidarisé avec le plateau fixe 71 dans une position de référence et la pièce mobile 73 est déplacée en rotation suivant l'axe de rotation AXROT jusqu'à ce que l'organe de connexion 32 vienne au contact du support d'immobilisation 74 dans le cas d'un organe de connexion 32 formé par un connecteur coudé ou jusqu'à ce que le support d'immobilisation 74 soit radialement opposé à un détrompeur de l'organe de connexion 32 formé par un connecteur droit.

Une fois la pièce mobile 73 déplacée celle-ci est alors immobilisée par rapport au disque fixe 78 et l'opérateur peut alors relever l'orientation angulaire relative θ1 entre l'organe de connexion 32 et la gaine de protection de l'élément longiligne 34.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Outil (70) d'orientation angulaire pour permettre une fabrication et un contrôle d'un harnais (30), ledit harnais (30) comportant au moins un organe de connexion (32) et au moins un élément longiligne (34), où ledit outil (70) comporte :
• un plateau fixe (71) comportant une portion de forme plane,
• au moins un dispositif d'immobilisation (72) pour immobiliser en tout ou partie ledit au moins un élément longiligne (34) et rendre en tout ou partie ledit au moins un élément longiligne (34) solidaire dudit plateau fixe (71),
• une pièce mobile (73) présentant un degré de mobilité en rotation par rapport audit plateau fixe (71) autour d'un axe de rotation (AXROT), ledit axe de rotation (AXROT) étant agencé parallèlement à une direction longitudinale (OX) selon laquelle s'étend longitudinalement ledit au moins un élément longiligne (34) sur ledit plateau fixe (71),
• au moins un support d'immobilisation (74) configuré pour immobiliser ledit au moins un organe de connexion (32) par rapport à ladite pièce mobile (73) et rendre ledit au moins un organe de connexion (32) solidaire de ladite pièce mobile (73), et
• une échelle angulaire graduée (75) pour relever une orientation angulaire relative (θ1) entre ledit au moins un élément longiligne (34) et ledit au moins un organe de connexion (32), ladite orientation angulaire relative (θ1) étant définie dans un plan perpendiculaire à ladite direction longitudinale (OX) selon laquelle s'étend longitudinalement ledit au moins un élément longiligne (34) sur ledit plateau fixe (71).

2. Outil selon la revendication 1,
**caractérisé en ce que** ledit outil (70) comporte un moyen de verrouillage angulaire (76) pour verrouiller en position ladite pièce mobile (73) par rapport audit plateau fixe (71).

3. Outil selon l'une quelconque des revendications 1 à 2,
**caractérisé en ce que** ledit outil (70) comporte au moins un palier de guidage (77, 77', 77") pour guider en rotation ladite pièce mobile (73) autour dudit axe de rotation (AXROT).

4. Outil selon l'une quelconque des revendications 1 à 3,
**caractérisé en ce que** ledit outil (70) comporte un disque fixe (78) solidaire dudit plateau fixe (71), ledit disque fixe (78) comportant, pour indiquer ladite orientation angulaire relative (θ1), soit ladite échelle angulaire graduée (75) soit un index radial (79) destiné à être agencé en regard de ladite échelle angulaire graduée (75).

5. Outil selon l'une quelconque des revendications 1 à 4,
**caractérisé en ce que** ladite pièce mobile (73) comporte un disque mobile (80) comportant, pour indiquer ladite orientation angulaire relative (θ1), soit ladite échelle angulaire graduée (75) soit un index radial (79) destiné à être agencé en regard de ladite échelle angulaire graduée (75).

6. Outil selon la revendication 4,
**caractérisé en ce que**, ledit outil (70) comportant un moyen de verrouillage angulaire (76) pour verrouiller en position ladite pièce mobile (73) par rapport audit plateau fixe (71), ledit moyen de verrouillage angulaire (76) comporte un doigt d'indexage, ledit doigt d'indexage comportant un corps (60) solidaire soit dudit disque fixe (78) soit de la pièce mobile (73) et une tige (61) mobile en translation par rapport audit corps (60) selon une direction AX parallèle à ladite direction longitudinale OX.

7. Outil selon la revendication 6,
**caractérisé en ce que**, ladite pièce mobile (73) comportant un disque mobile (80), ledit disque mobile (80) présente une face externe (64), ladite face externe (64) comportant une pluralité d'encoches (63) équiréparties en azimut autour dudit axe de rotation (AXROT), chaque encoche (63) comportant une forme complémentaire à ladite tige (61) dudit doigt d'indexage.

8. Outil selon l'une quelconque des revendications 4, 6 à 7,
**caractérisé en ce que** ledit disque fixe (78) comporte une ouverture fixe (90) et ladite pièce mobile (73) comporte une ouverture mobile (91), ladite ouverture fixe (90) étant agencée en regard de ladite ouverture mobile (91) quel que soit un positionnement angulaire de ladite pièce mobile (73) par rapport audit disque fixe (78) autour dudit axe de rotation (AXROT).

9. Outil selon l'une quelconque des revendications 1 à 8,
**caractérisé en ce que** ledit outil (70) comporte un bras mobile (81) solidaire en rotation de ladite pièce mobile (73), ledit au moins un support d'immobilisation (74) étant monté sur ledit bras mobile (81).

10. Outil selon la revendication 9,
**caractérisé en ce que** ledit outil (70) comporte des moyens de réglage (65) permettant de modifier un positionnement dudit au moins un support d'immobilisation (74) sur ledit bras mobile (81).

## Patentansprüche

1. Werkzeug zur Winkelausrichtung (70) für Fertigung und Kontrolle eines Kabelbaums (30), wobei der Kabelbaum (30) mindestens ein Verbindungsorgan (32) und mindestens ein langgestrecktes Element (34) umfasst, wobei das Werkzeug (70) umfasst:
- eine feste Platte (71) mit einem eben geformten Abschnitt,
- mindestens eine Immobilisierungsvorrichtung (72), um das mindestens eine langgestreckte Element (34) ganz oder teilweise zu immobilisieren und das mindestens eine langgestreckte Element (34) ganz oder teilweise mit der festen Platte (71) fest zu verbinden,
- ein bewegliches Teil (73), das einen Freiheitsgrad der Drehung in Bezug auf die feste Platte (71) um eine Drehachse (AXROT) aufweist, wobei die Drehachse (AXROT) parallel zu einer Längsrichtung (OX) angeordnet ist, in der sich das mindestens eine langgestreckte Element (34) auf der festen Platte (71) erstreckt,
- mindestens einen Immobilisierungshalter (74), der konfiguriert ist, um das mindestens eine Verbindungsorgan (32) in Bezug auf das bewegliche Teil (73) zu immobilisieren und das mindestens eine Verbindungsorgan (32) fest mit dem beweglichen Teil (73) zu verbinden, und
- eine unterteilte Winkelskala (75) zum Ablesen einer relativen Winkelausrichtung (θ1) zwischen dem mindestens einen langgestreckten Element (34) und dem mindestens einen Verbindungsorgan (32), wobei die relative Winkelausrichtung (θ1) in einer Ebene senkrecht zu der Längsrichtung (OX) definiert ist, in der sich das mindestens eine langgestreckte Element (34) auf der festen Platte (71) in Längsrichtung erstreckt.

2. Werkzeug nach Anspruch 1,
**dadurch gekennzeichnet, dass** das Werkzeug (70) ein Winkelverriegelungsmittel (76) aufweist, um das bewegliche Teil (73) in Bezug auf die feste Platte (71) in Position zu verriegeln.

3. Werkzeug nach einem der Ansprüche 1 bis 2,
**dadurch gekennzeichnet, dass** das Werkzeug (70) mindestens ein Führungslager (77, 77', 77") zum Führen des beweglichen Teils (73) in Drehung um die Drehachse (AXROT) aufweist.

4. Werkzeug nach einem der Ansprüche 1 bis 3,
**dadurch gekennzeichnet, dass** das Werkzeug (70) eine feste Scheibe (78) umfasst, die fest mit der festen Platte (71) verbunden ist, wobei die feste Scheibe (78) zum Anzeigen der relativen Winkelausrichtung (θ1) entweder die unterteilte Winkelskala (75) oder einen radialen Index (79) umfasst, der dazu bestimmt ist, gegenüber der unterteilten Winkelskala (75) angeordnet zu werden.

5. Werkzeug nach einem der Ansprüche 1 bis 4,
**dadurch gekennzeichnet, dass** das bewegliche Teil (73) eine bewegliche Scheibe (80) umfasst, die zum Anzeigen der relativen Winkelausrichtung (θ1) entweder die unterteilte Winkelskala (75) oder einen radialen Index (79) umfasst, der dazu bestimmt ist, gegenüber der unterteilten Winkelskala (75) angeordnet zu werden.

6. Werkzeug nach Anspruch 4,
**dadurch gekennzeichnet, dass** das Werkzeug (70) ein Winkelverriegelungsmittel (76) umfasst, um das bewegliche Teil (73) in Bezug auf die feste Scheibe (71) in Position zu verriegeln, wobei das Winkelverriegelungsmittel (76) einen Indexierungsfinger umfasst, wobei der Indexierungsfinger einen Körper (60), der entweder mit der festen Scheibe (78) oder mit dem beweglichen Teil (73) fest verbunden ist, und einen Schaft (61) umfasst, der in Bezug auf den Körper (60) in einer Richtung AX parallel zur Längsrichtung OX translatorisch beweglich ist.

7. Werkzeug nach Anspruch 6,
**dadurch gekennzeichnet, dass** das bewegliche Teil (73) eine bewegliche Scheibe (80) aufweist, wobei die bewegliche Scheibe (80) eine Außenfläche (64) aufweist, die Außenfläche (64) eine Mehrzahl von Kerben (63) aufweist, die im Azimut um die Drehachse (AXROT) gleichmäßig verteilt sind, wobei jede Kerbe (63) eine Form aufweist, die komplementär zu dem Schaft (61) des Indexierungsfingers ist.

8. Werkzeug nach einem der Ansprüche 4, 6 bis 7,
**dadurch gekennzeichnet, dass** die feste Scheibe (78) eine feste Öffnung (90) aufweist und das bewegliche Teil (73) eine bewegliche Öffnung (91) aufweist, wobei die feste Öffnung (90) unabhängig von einer Winkelpositionierung des beweglichen Teils (73) in Bezug auf die feste Scheibe (78) um die Drehachse (AXROT) gegenüber der beweglichen Öffnung (91) angeordnet ist.

9. Werkzeug nach einem der Ansprüche 1 bis 8,
**dadurch gekennzeichnet, dass** das Werkzeug (70) einen beweglichen Arm (81) umfasst, der drehfest mit dem beweglichen Teil (73) verbunden ist, wobei der mindestens eine Immobilisierungshalter (74) an dem beweglichen Arm (81) angebracht ist.

10. Werkzeug nach Anspruch 9,
**dadurch gekennzeichnet, dass** das Werkzeug (70) Einstellmittel (65) umfasst, die es ermöglichen, eine Positionierung des mindestens einen Immobilisierungshalters (74) an dem beweglichen Arm (81) zu verändern.

## Claims

1. Angular orientation tool (70) for allowing the manufacture and checking of a harness (30), said harness (30) comprising at least one connection member (32) and at least one elongate element (34),
wherein said tool (70) comprises:
• a fixed plate (71) comprising a planar portion,
• at least one immobilization device (72) for immobilizing all or part of said at least one elongate element (34) and permanently attaching all or part of said at least one elongate element (34) to said fixed plate (71),
• a movable part (73) exhibiting a degree of rotational mobility in respect of said fixed plate (71) about an axis of rotation (AXROT), said axis of rotation (AXROT) being arranged parallel to a longitudinal direction (OX) along which said at least one elongate element (34) extends longitudinally on said fixed plate (71),
• at least one immobilization support (74) configured to immobilize said at least one connection member (32) relative to said movable part (73) and to permanently attach said at least one connection member (32) to said movable part (73), and
• a graduated angular scale (75) for reading a relative angular orientation (θ1) between said at least one elongate element (34) and said at least one connection member (32), said relative angular orientation (θ1) being defined in a plane perpendicular to said longitudinal direction (OX) in which said at least one elongate element (34) extends longitudinally on said fixed plate (71).

2. Tool according to Claim 1,
**characterized in that** said tool (70) comprises an angular locking means (76) for locking said movable part (73) in position relative to said fixed plate (71).

3. Tool according to any one of Claims 1 to 2,
**characterized in that** said tool (70) comprises at least one guide bearing (77, 77', 77") for guiding said movable part (73) in rotation about said axis of rotation (AXROT).

4. Tool according to any one of Claims 1 to 3,
**characterized in that** said tool (70) comprises a fixed disk (78) permanently attached to said fixed plate (71), said fixed disk (78) comprising, in order to indicate said relative angular orientation (θ1), either said graduated angular scale (75) or a radial index (79) intended to be arranged opposite said graduated angular scale (75).

5. Tool according to any one of Claims 1 to 4,
**characterized in that** said movable part (73) comprises a movable disk (80) comprising, in order to indicate said relative angular orientation (θ1), either said graduated angular scale (75) or a radial index (79) intended to be arranged opposite said graduated angular scale (75).

6. Tool according to Claim 4,
**characterized in that** said tool (70) comprising an angular locking means (76) for locking said movable part (73) in position relative to said fixed plate (71), said angular locking means (76) comprises an indexing pin, said indexing pin comprising a body (60) permanently attached either to said fixed disk (78) or to the movable part (73) and a rod (61) that is able to move in translation relative to said body (60) in a direction AX parallel to said longitudinal direction OX.

7. Tool according to Claim 6,
**characterized in that** said movable part (73) comprising a movable disk (80), said movable disk (80) has an outer face (64), said outer face (64) comprising a plurality of notches (63) equally spaced in azimuth about the axis of rotation (AXROT), each notch (63) comprising a form complementary to said rod (61) of said indexing pin.

8. Tool according to any one of Claims 4, 6 to 7,
**characterized in that** said fixed disk (78) comprises a fixed opening (90) and said movable part (73) comprises a movable opening (91), said fixed opening (90) being arranged opposite said movable opening (91) regardless of an angular positioning of said movable part (73) relative to said fixed disk (78) about said axis of rotation (AXROT).

9. Tool according to any one of Claims 1 to 8,
**characterized in that** said tool (70) comprises a movable arm (81) rotationally fixed to said movable part (73), said at least one immobilization support (74) being mounted on said movable arm (81).

10. Tool according to Claim 9,
**characterized in that** said tool (70) comprises adjustment means (65) allowing the positioning of said at least one immobilization support (74) on said movable arm (81) to be modified.
